# EUROPEAN PATENT APPLICATION

(11) **EP 4 629 354 A1**
(43) Date of publication of application: **08.10.2025**
(21) Application number: 23907674.8
(22) Date of filing: 19.12.2023
(51) Int. Cl.: H01M 8/04119, B01D 63/04

(54) **CARTRIDGE FOR FUEL CELL HUMIDIFIER, AND FUEL CELL HUMIDIFIER**

(30) Priority: 22.12.2022 KR 20220181680
(71) Applicant: Kolon Industries, Inc., Seoul 07793 (KR)
(72) Inventor: OH, Young Seok, Seoul 07793 (KR); LEE, Ah Reum, Seoul 07793 (KR); LEE, Ji Yoon, Seoul 07793 (KR)
(74) Representative: Vossius & Partner Patentanwälte Rechtsanwälte mbB
(86) International application number: PCT/KR2023/020939
(87) International publication number: WO 2024/136389

(57) **Abstract**

The present invention relates to a cartridge for a fuel cell humidifier, and a fuel cell humidifier, the cartridge being provided in a fuel cell humidifier which uses a second gas to humidify a first gas which is to be supplied to a fuel cell stack, and the cartridge comprising: an inner case provided with respective openings in both ends thereof; and a hollow fiber membrane bundle received inside the inner case, wherein the hollow fiber membrane bundle comprises a plurality of hollow fiber membranes so as to satisfy at least one among a flow velocity condition for enabling a first gas to flow at a flow velocity of 1 m/s to 10 m/s, and a turbulence condition for enabling the first gas to flow at a Reynolds number of 50 to 400.

## Description

### [TECHNICAL FIELD]

The present disclosure relates to a humidifier for fuel cells configured to supply humidified gas to a fuel cell.

### [Background Art]

A fuel cell has advantages in that it is possible to continuously generate electricity as long as hydrogen and oxygen are supplied, unlike a general chemical cell, such as a dry cell or a storage cell, and in that there is no heat loss, whereby efficiency of the fuel cell is about twice as high as efficiency of an internal combustion engine.

In addition, the fuel cell directly converts chemical energy generated by combination of hydrogen and oxygen into electrical energy, whereby the amount of contaminants that are discharged is small. Consequently, the fuel cell has advantages in that the fuel cell is environmentally friendly and in that a concern about depletion of resources due to an increase in energy consumption can be reduced.

Based on the kind of an electrolyte that is used, such a fuel cell may generally be classified as a polymer electrolyte membrane fuel cell (PEMFC), a phosphoric acid fuel cell (PAFC), a molten carbonate fuel cell (MCFC), a solid oxide fuel cell (SOFC), or an alkaline fuel cell (AFC).

These fuel cells are operated fundamentally by the same principle, but are different from each other in terms of the kind of fuel that is used, operating temperature, catalyst, and electrolyte. Among these fuel cells, the polymer electrolyte membrane fuel cell (PEMFC) is known as being the most favorable to a transportation system as well as small-scale stationary power generation equipment, since the polymer electrolyte membrane fuel cell is operated at a lower temperature than the other fuel cells and the output density of the polymer electrolyte membrane fuel cell is high, whereby it is possible to miniaturize the polymer electrolyte membrane fuel cell.

One of the most important factors in improving the performance of the polymer electrolyte membrane fuel cell (PEMFC) is to supply a predetermined amount or more of moisture to a polymer electrolyte membrane or a proton exchange membrane (PEM) of a membrane electrode assembly (MEA) in order to retain moisture content. The reason for this is that, if the polymer electrolyte membrane or the proton exchange membrane is dried, power generation efficiency is abruptly reduced.

1) A bubbler humidification method of filling a pressure-resistant container with water and allowing a target gas to pass through a diffuser in order to supply moisture, 2) a direct injection method of calculating the amount of moisture to be supplied that is necessary for fuel cell reaction and directly supplying moisture to a gas stream pipe through a solenoid valve, and 3) a membrane humidification method of supplying moisture to a gas fluid bed using a polymer separation membrane are used as methods of humidifying the polymer electrolyte membrane or the proton exchange membrane.

Among these methods, the membrane humidification method, which provides water vapor to air that is supplied to the polymer electrolyte membrane or the proton exchange membrane using a membrane configured to selectively transmit only water vapor included in off-gas in order to humidify the polymer electrolyte membrane or the proton exchange membrane, is advantageous in that it is possible to reduce the weight and size of a humidifier.

When a module is formed, a hollow fiber membrane having large transmission area per unit volume is suitable for a permselective membrane used in the membrane humidification method. That is, when a humidifier is manufactured using a hollow fiber membrane, high integration of the hollow fiber membrane having large contact surface area is possible, whereby it is possible to sufficiently humidify the fuel cell even at a small capacity, it is possible to use a low-priced material, and it is possible to collect moisture and heat included in off-gas discharged from the fuel cell at a high temperature and to reuse the collected moisture and heat through the humidifier.

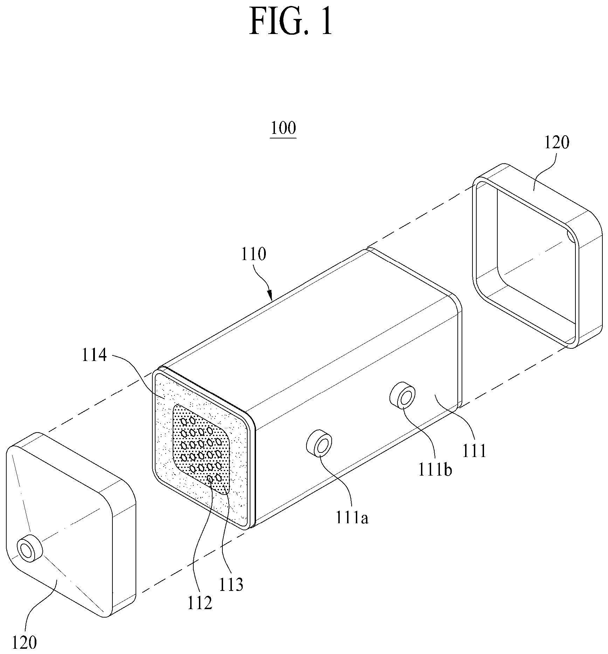

FIG. 1 is a schematic exploded perspective view of a conventional humidifier for fuel cells.

As illustrated in FIG. 1, a conventional membrane humidification type humidifier 100 includes a humidifying module 110, in which moisture exchange is performed between air supplied from the outside and off-gas discharged from a fuel cell stack (not shown), and caps 120 coupled respectively to opposite ends of the humidifying module 110.

One of the caps 120 transmits air supplied from the outside to the humidifying module 110, and the other cap transmits air humidified by the humidifying module 110 to the fuel cell stack.

The humidifying module 110 includes a mid-case 111 having an off-gas inlet 111a and an off-gas outlet 111b and a hollow fiber membrane bundle 112 in the mid-case 111. Opposite ends of the hollow fiber membrane bundle 112 are potted in fixing layers 113. In general, each of the fixing layers 113 is formed by hardening a liquid polymer, such as liquid polyurethane resin, using a casting method. The fixing layers 113, in which ends of the hollow fiber membrane bundle 112 are potted, and resin layers 114 provided between the fixing layers 113 and the mid-case 111 isolate the inner spaces of the caps 120 from the inner space of the mid-case 111. Similarly to the fixing layers 113, each of the resin layers 114 is generally formed by hardening a liquid polymer, such as liquid polyurethane resin, using a casting method.

Air supplied from the outside flows along hollows of the hollow fiber membrane bundle 112. Off-gas introduced into the mid-case 111 through the off-gas inlet 111a comes into contact with outer surfaces of the hollow fiber membrane bundle 112, and is discharged from the mid-case 111 through the off-gas outlet 111b. When the off-gas comes into contact with the outer surfaces of the hollow fiber membrane bundle 112, moisture contained in the off-gas is transmitted through the hollow fiber membrane bundle 112 to humidify air flowing along the hollows of the hollow fiber membrane bundle 112. The humidified air is supplied to the fuel cell stack through a first cap 120, which is one of the caps 120.

In this case, the humidified air must be supplied to the fuel cell stack in a vapor state. Conventionally, however, condensate generated during a process of humidifying air may be accumulated in the first cap 120, and the condensate accumulated in the first cap 120 may be supplied to the fuel cell stack together with the humidified air. As a result, there is a problem in which the condensate blocks a flow path of a separator of the fuel cell due to flooding, whereby the efficiency and durability of a fuel cell system are reduced.

### [Disclosure]

### [Technical Problem]

The present disclosure has been made in view of the above problems, and it is an object of the present disclosure to provide a cartridge of a humidifier for fuel cells and a humidifier for fuel cells capable of reducing the flow rate of condensate supplied to a fuel cell stack.

### [Technical Solution]

In order to accomplish the above object, the present disclosure may include the following constructions.

A cartridge of a humidifier for fuel cells according to the present disclosure is provided in a humidifier for fuel cells, the humidifier being configured to humidify a first gas to be supplied to a fuel cell stack using a second gas, and may include an inner case having openings formed at opposite ends and a hollow fiber membrane bundle received in the inner case. The hollow fiber membrane bundle may include a plurality of hollow fiber membranes, and may be formed so as to satisfy at least one of flow rate conditions in which the first gas flows at a flow rate of 1 m/s to 10 m/s and turbulent flow conditions in which the first gas flows with a Reynolds number of 50 to 400.

A humidifier for fuel cells according to the present disclosure may include a humidifying module configured to humidify a first gas to be supplied to a fuel cell stack using a second gas, a first cap coupled to one end of the humidifying module, and a second cap coupled to the other end of the humidifying module. The humidifying module may include a mid-case having open opposite ends and at least one cartridge received in the mid-case. The cartridge may include an inner case having openings formed at opposite ends and a hollow fiber membrane bundle received in the inner case. The hollow fiber membrane bundle may include a plurality of hollow fiber membranes and may allow the first gas to flow therethrough at a flow rate of 1 m/s to 10 m/s.

A humidifier for fuel cells according to the present disclosure may include a humidifying module configured to humidify a first gas to be supplied to a fuel cell stack using a second gas, a first cap coupled to one end of the humidifying module, and a second cap coupled to the other end of the humidifying module. The humidifying module may include a mid-case having open opposite ends and at least one cartridge received in the mid-case. The cartridge may include an inner case having openings formed at opposite ends and a hollow fiber membrane bundle received in the inner case. The hollow fiber membrane bundle may include a plurality of hollow fiber membranes and may allow the first gas to flow therethrough with a Reynolds number of 50 to 400.

### [Advantageous Effects]

The present disclosure is implemented so as to reduce the flow rate of condensate supplied to a fuel cell stack. Therefore, the present disclosure may prevent flooding caused by the condensate, thereby contributing to improving the efficiency and durability of a fuel cell system.

### [Description of Drawings]

FIG. 1 is a schematic exploded perspective view of a conventional humidifier for fuel cells.
FIG. 2 is a schematic exploded perspective view of a humidifier for fuel cells according to the present disclosure.
FIG. 3 is a schematic exploded sectional view showing the humidifier for fuel cells according to the present disclosure, taken along line I-I of FIG. 2.
FIG. 4 is a schematic coupled sectional view showing the humidifier for fuel cells according to the present disclosure, taken along line I-I of FIG. 2.
FIGs. 5 and 6 are schematic plan views of a cartridge of the humidifier for fuel cells according to the present disclosure.
FIG. 7 is a schematic enlarged sectional view showing part A of FIG. 4.

### [Best Mode]

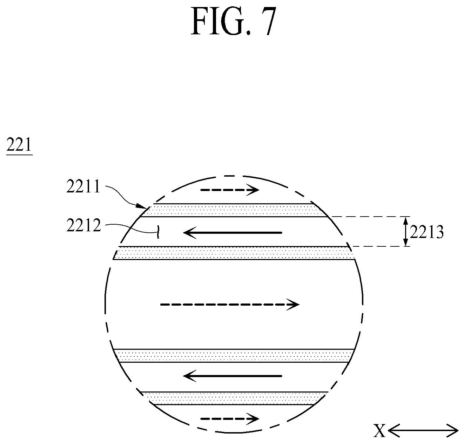

Hereinafter, an embodiment of a humidifier for fuel cells according to the present disclosure will be described in detail with reference to the accompanying drawings. A cartridge of a humidifier for fuel cells according to the present disclosure may be included in a humidifier for fuel cells according to the present disclosure, and therefore the cartridge of the humidifier for fuel cells according to the present disclosure will also be described while the humidifier for fuel cells according to the present disclosure is described. Meanwhile, in FIG. 7, the solid arrow indicates the flow direction of a first gas flowing along a hollow of a hollow fiber membrane, and the dotted arrow indicates the flow direction of a second gas flowing outside the hollow fiber membrane.

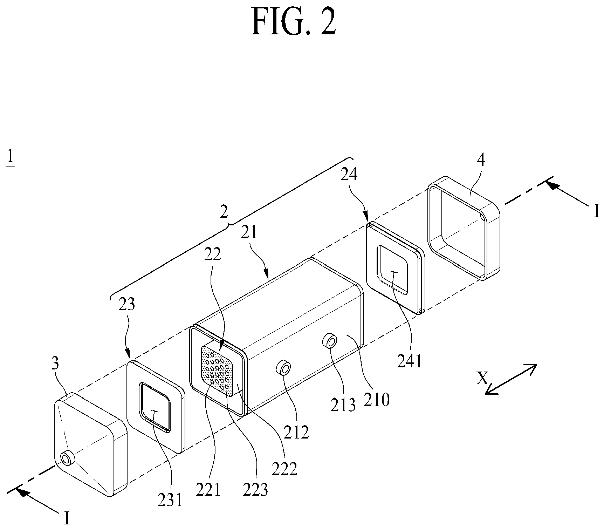

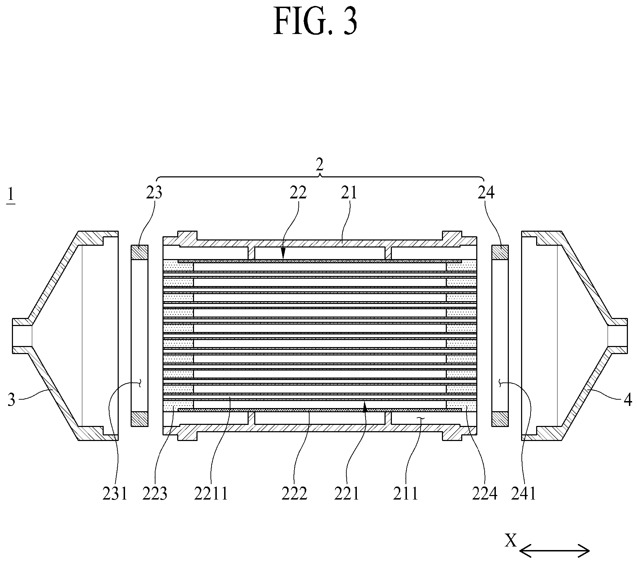

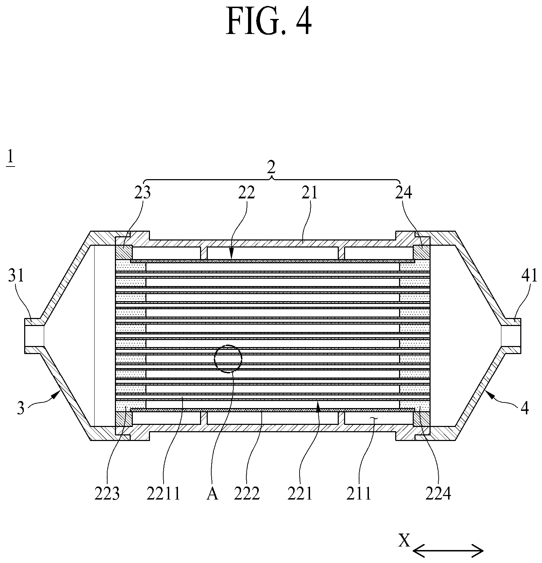

Referring to FIGs. 2 to 4, a humidifier 1 for fuel cells according to the present disclosure is configured to humidify a first gas to be supplied to a fuel cell stack (not shown) using a second gas. In this case, the first gas may be dry gas, and the second gas may be wet gas. The first gas may be discharged from the fuel cell stack. The first gas may be fuel gas or air. The first gas may be humidified by the second gas, and may be supplied to the fuel cell stack. The humidifier 1 for fuel cells according to the present disclosure includes a humidifying module 2 configured to humidify the first gas, a first cap 3 coupled to one end of the humidifying module 2, and a second cap 4 coupled to the other end of the humidifying module 2.

Referring to FIGs. 2 to 4, the humidifying module 2 humidifies the first gas. The first cap 3 may be coupled to one end of the humidifying module 2. The second cap 4 may be coupled to the other end of the humidifying module 2. The humidifying module 2 may supply humidified dry gas to the fuel cell stack using the first gas and the second gas. When the first gas is dry gas and the second gas is wet gas, the first gas may be humidified by the second gas and may then be supplied to the fuel cell stack.

The humidifying module 2 includes a mid-case 21 and at least one cartridge 22.

The cartridge 22 is coupled to the mid-case 21. The cartridge 22 may be received in the mid-case 21. Opposite ends of the mid-case 21 are open. In this case, a receiving hole 211 may be formed in the mid-case 21. The receiving hole 211 may be formed so as to extend through the mid-case 21 in a first axis direction (X-axis direction). At least one cartridge 22 may be disposed in the receiving hole 211.

The mid-case 21 may include a mid body 210. The cartridge 22 is received in the mid body 210. The cartridge 22 may be disposed in the mid body 210 so as to be received in the mid body 210. At least one cartridge 22 may be received in the mid body 210. The receiving hole 211 may be formed through the mid body 210 in the first axis direction (X-axis direction).

A mid inlet 212 and a mid outlet 213 may be formed in the mid-case 21. The mid inlet 212 may introduce the second gas into the mid-case 21. The mid outlet 213 may discharge the second gas from the mid-case 21. Each of the mid outlet 213 and the mid inlet 212 may protrude from the mid-case 21.

The cartridge 22 is disposed in the mid-case 21. The cartridge 22 includes a hollow fiber membrane bundle 221. The hollow fiber membrane bundle 221 may be coupled to the cartridge 22 so as to be modularized. Consequently, the hollow fiber membrane bundle 221 may be installed in the mid-case 21 through the process of coupling the cartridge 22 to the mid-case 21. In the humidifier 1 for fuel cells according to the present disclosure, therefore, ease in installation, separation, and replacement of the hollow fiber membrane bundle 221 may be improved. The hollow fiber membrane bundle 221 may include a plurality of hollow fiber membranes 2211.

The cartridge 22 may include an inner case 222.

The inner case 222 has openings formed at opposite ends, and receives the hollow fiber membrane bundle 221. The hollow fiber membrane bundle 221 may be disposed in the inner case 222 so as to be modularized. The hollow fiber membrane bundle 221 may include a polymer membrane made of polysulfone resin, polyethersulfone resin, sulfonated polysulfone resin, polyvinylidene fluoride (PVDF) resin, polyacrylonitrile (PAN) resin, polyimide resin, polyamide imide resin, polyester imide resin, or a mixture of two or more thereof.

The cartridge 22 may include a first fixing layer 223. The first fixing layer 223 is configured to fix one end of the hollow fiber membrane bundle 221. The first fixing layer 223 may close the opening formed in one end of the inner case 222. In this case, the first fixing layer 223 may be formed so as not to block hollows 2212 (shown in FIG. 7) of the hollow fiber membrane bundle 221. The first fixing layer 223 may be formed by hardening a liquid resin, such as liquid polyurethane resin, through a casting process. A part of the first fixing layer 223 may be located in the inner case 222, and the remaining part of the first fixing layer may protrude outward from the inner case 222. The first fixing layer 223 may fix one end of the hollow fiber membrane bundle 221 to the inner case 222.

The cartridge 22 may include a second fixing layer 224. The second fixing layer 224 is configured to fix the other end of the hollow fiber membrane bundle 221. The second fixing layer 224 may close the opening formed in the other end of the inner case 222. In this case, the second fixing layer 224 may be formed so as not to block the hollows 2212 (shown in FIG. 7) of the hollow fiber membrane bundle 221. The second fixing layer 224 may be formed by hardening a liquid resin, such as liquid polyurethane resin, through a casting process. A part of the second fixing layer 224 may be located in the inner case 222, and the remaining part of the second fixing layer may protrude outward from the inner case 222. The second fixing layer 224 may fix the other end of the hollow fiber membrane bundle 221 to the inner case 222. Since the second fixed layer 224 and the first fixed layer 223 are formed so as not to block the hollows 2212 (shown in FIG. 7) of the hollow fiber membrane bundle 221, the first gas may be supplied to the hollows 2212 (shown in FIG. 7) of the hollow fiber membrane bundle 221 without obstruction by the second fixed layer 224 and the first fixed layer 223, and may be discharged from the hollows 2212 (shown in FIG. 7) of the hollow fiber membrane bundle 221 without obstruction by the second fixed layer 224 and the first fixed layer 223.

Referring to FIGs. 2 to 6, the cartridge 22 may include an inner inlet 225 and an inner outlet 226.

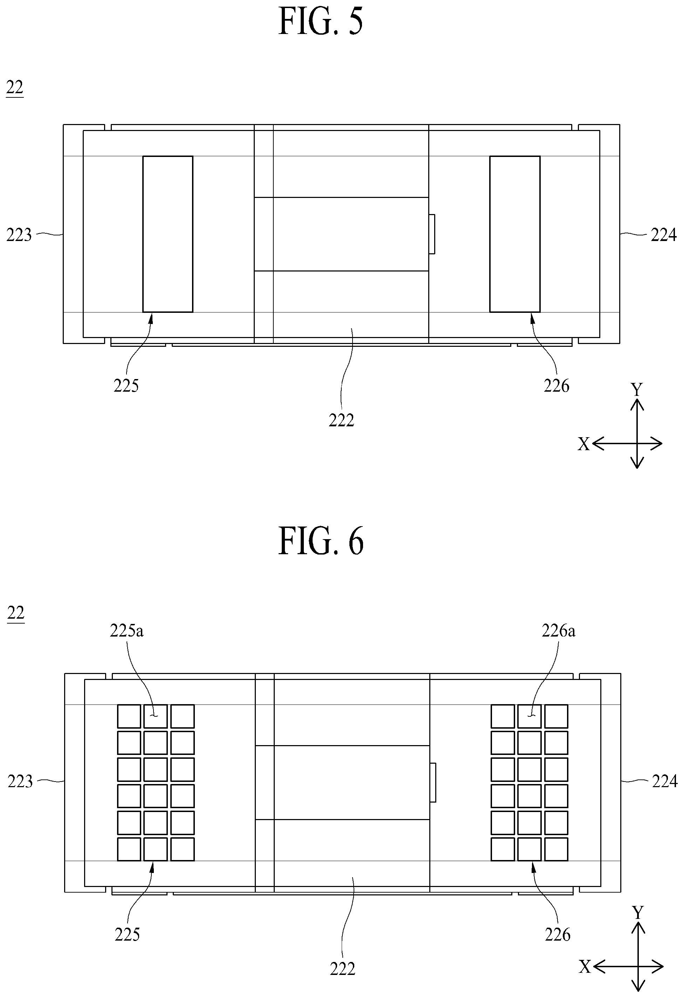

The inner inlet 225 is formed at the inner case 222. The inner inlet 225 may be formed at one side of the inner case 222. One side of the inner case 222 may be disposed so as to face any one of the side walls of the mid-case 21. The inner inlet 225 may introduce the second gas into the inner case 222. The inner inlet 225 may be formed through the inner case 222. As shown in FIG. 5, the inner inlet 225 may be implemented by one through-hole formed through the inner case 222. As shown in FIG. 6, the inner inlet 225 may be implemented by a plurality of through-holes formed through the inner case 222. In this case, the inner inlet 225 may include a plurality of inflow windows 225a formed through different parts of the inner case 222. The inflow windows 225a may be disposed spaced apart from each other in the first axis direction (X-axis direction) and a second axis direction (Y-axis direction) so as to form a matrix. The second axis direction (Y-axis direction) and the first axis direction (X-axis direction) are axial directions disposed perpendicular to each other.

The inner outlet 226 is formed at the inner case 222. The inner outlet 226 may be formed at one side of the inner case 222. The inner outlet 226 may discharge the second gas from the inner case 222. The inner outlet 226 may be formed through the inner case 222. As shown in FIG. 5, the inner outlet 226 may be implemented by one through-hole formed through the inner case 222. As shown in FIG. 6, the inner outlet 226 may be implemented by a plurality of through-holes formed through the inner case 222. In this case, the inner outlet 226 may include a plurality of outflow windows 226a formed through different parts of the inner case 222. The outflow windows 226a may be disposed spaced apart from each other in the first axis direction (X-axis direction) and the second axis direction (Y-axis direction) so as to form a matrix. The inner outlet 226 and the inner inlet 225 may be disposed spaced apart from each other in the first axis direction (X-axis direction).

When the first gas is dry gas and the second gas is wet gas, the second gas may be supplied to a space between an inner surface of the mid-case 21 and an outer surface of the cartridge 22 through the mid inlet 212, may be supplied into the cartridge 22 through the inner inlet 225, and may come into contact with an outer surface of the hollow fiber membrane bundle 221. During this process, moisture contained in the second gas may be transmitted through the hollow fiber membrane bundle 221 to humidify the first gas flowing along the hollows 2212 (shown in FIG. 7) of the hollow fiber membrane bundle 221. The humidified first gas may be discharged from the hollow fiber membrane bundle 221, and may then be supplied to the fuel cell stack through the first cap 3 or the second cap 4. After humidifying the first gas, the second gas may be discharged to the space between the outer surface of the cartridge 22 and the inner surface of the mid-case 21 through the inner outlet 226, and may be discharged from the mid-case 21 through the mid outlet 213. In this case, the second gas may be off-gas discharged from the fuel cell stack.

The humidifying module 2 may include a first packing unit 23.

The first packing unit 23 is airtightly coupled to one end of the mid-case 21 through mechanical assembly. Accordingly, the first packing unit 23 may ensure that the first cap 3 is only in fluid communication with the hollow fiber membrane bundle 221. Consequently, the first packing unit 23 may prevent direct mixing of the first gas and the second gas. The first packing unit 23 may be disposed between the mid-case 21 and the cartridge 22, thereby forming a seal between the mid-case 21 and the cartridge 22. In this case, the cartridge 22 may be inserted into a first insertion hole 231 formed in the first packing unit 23. The first packing unit 23 may be in contact with each of the inner surface of the mid-case 21, the outer surface of the cartridge 22, and the first fixing layer 223. The first packing unit 23 may be airtightly coupled to one end of the mid-case 21 through such contact. In this case, the first packing unit 23 may also be in contact with each of a part of the inner surface of the mid-case 21, a part of the outer surface of the cartridge 22, and a part of the first fixing layer 223.

The humidifying module 2 may include a second packing unit 24.

The second packing unit 24 is airtightly coupled to the other end of the mid-case 21 through mechanical assembly. Accordingly, the second packing unit 24 may ensure that the second cap 4 is only in fluid communication with the hollow fiber membrane bundle 221. Consequently, the second packing unit 24 may prevent direct mixing of the first gas and the second gas. The second packing unit 24 may be disposed between the mid-case 21 and the cartridge 22, thereby forming a seal between the mid-case 21 and the cartridge 22. In this case, the cartridge 22 may be inserted into a second insertion hole 241 formed in the second packing unit 24. The second packing unit 24 may be in contact with each of the inner surface of the mid-case 21, the outer surface of the cartridge 22, and the second fixing layer 224. The second packing unit 24 may be airtightly coupled to the other end of the mid-case 21 through such contact. In this case, the second packing unit 24 may also be in contact with each of a part of the inner surface of the mid-case 21, a part of the outer surface of the cartridge 22, and a part of the second fixing layer 224.

Referring to FIGs. 2 to 4, the first cap 3 is coupled to one end of the humidifying module 2. A space between the first cap 3 and the cartridge 22 may be isolated from the space between the cartridge 22 and the mid-case 21 in a hermetically sealed state by the first packing unit 23. The first cap 3 may include a first port 31. The first port 31 is configured to allow the first gas to flow therethrough. The first port 31 may communicate with the hollows 2212 (shown in FIG. 7) of the hollow fiber membrane bundle 221. In the process of the first gas flowing between the first cap 3 and the hollow fiber membrane bundle 221, therefore, the first gas may be introduced or discharged through the first port 31.

Referring to FIGs. 2 to 4, the second cap 4 is coupled to the other end of the humidifying module 2. The second cap 4 may be disposed so as to be spaced apart from the first cap 3 in the first axis direction (X-axis direction). A space between the second cap 4 and the cartridge 22 may be isolated from the space between the cartridge 22 and the mid-case 21 in a hermetically sealed state by the second packing unit 24. The second cap 4 may include a second port 41. The second port 41 is configured to allow the first gas to flow therethrough. The second port 41 may communicate with the hollows 2212 (shown in FIG. 7) of the hollow fiber membrane bundle 221. In the process of the first gas flowing between the second cap 4 and the hollow fiber membrane bundle 221, therefore, the first gas may be introduced or discharged through the second port 41. When the first gas is introduced through the second port 41, the first gas may be discharged through the first port 31. In this case, the first gas may exchange moisture with the second gas while sequentially passing through the second cap 4, the hollows 2212 (shown in FIG. 7) of the hollow fiber membrane bundle 221, and the first cap 3. When the first gas is discharged through the second port 41, the first gas may be introduced through the first port 31. In this case, the first gas may exchange moisture with the second gas while sequentially passing through the first cap 3, the hollows 2212 (shown in FIG. 7) of the hollow fiber membrane bundle 221, and the second cap 4. Although not shown, resin layers may be formed at the opposite ends of the mid-case 21 in place of the packing units 23 and 24. The resin layers may be formed by hardening a liquid polymer, such as liquid polyurethane resin, using a casting method.

Here, in the process of generating humidified dry gas using the first gas and the second gas, condensate may be generated. For example, when the fuel cell system is applied to a vehicle such as an electric vehicle, the amount of condensate generated may increase while the vehicle is operating at low power. When the vehicle accelerates while the condensate is generated in this way, flooding may occur as the condensate is supplied to the fuel cell stack, blocking a flow path of a separator of the fuel cell, thereby reducing the efficiency and durability of the fuel cell system. In order to prevent this, the hollow fiber membrane bundle 221 of the humidifier 1 for fuel cells according to the present disclosure may be implemented as follows.

Referring to FIGs. 2 to 7, the hollow fiber membrane bundle 221 may be implemented to allow the first gas to flow therethrough at a flow rate of 1 m/s to 10 m/s using the hollow fiber membranes 2211. In this case, the hollow fiber membrane bundle 221 may be implemented to satisfy the flow rate conditions in which the first gas flows at a flow rate of 1 m/s to 10 m/s using the hollow fiber membranes 2211. If the hollow fiber membrane bundle 221 allows the first gas to flow therethrough at a flow rate of less than 1 m/s, the amount of condensate generated may increase. If the hollow fiber membrane bundle 221 allows the first gas to flow therethrough at a flow rate of more than 10 m/s, the amount of condensate generated may be reduced, but the differential pressure may increase excessively, causing damage to or breakage of the hollow fiber membranes 2211. In consideration thereof, the humidifier 1 for fuel cells according to the present disclosure is implemented to allow the first gas to flow therethrough at a flow rate of 1 m/s to 10 m/s using the hollow fiber membrane bundle 221, thereby reducing the amount of condensate generated and at the same time reducing the risk of damage to or breakage of the hollow fiber membranes 2211.

This can be seen from the results of experiments that measured the amount of condensate generated in an example and a comparative example in which the first gas flowed at different flow rates under the conditions in which the flow rate of the first gas is 500 sLPM (standard liter per minute), the temperature of the first gas is 30°C, and the pressure of the first gas is 1.05 bara. In this case, the flow rate, temperature, and pressure of the first gas are measured by supplying the first gas to the hollow fiber membrane bundle 221 through the first cap 3 and the second cap 4, and are measured using a flow meter, a thermo-hygrometer, and a pressure gauge. The amount of condensate generated may be obtained by measuring the weight of the condensate generated in the mid-case 21, the first cap 3, and the second cap 4 after the experiment is performed. The amount of condensate generated may also be obtained by calculating the difference between the weight before the experiment is performed and the weight after the experiment is performed for each of the example and the comparative example. Meanwhile, the experiment was conducted under the conditions in which the flow rate of the second gas was 450 sLPM, the temperature of the second gas was 60°C, the relative humidity (RH) of the second gas was 100%, and the pressure of the second gas was 1.03 bara.

First, according to the comparative example, the first gas flowed at 0.8 m/s under the conditions in which the flow rate of the first gas was 500 sLPM, the temperature of the first gas was 30°C, and the pressure of the first gas was 1.05 bara, as described above. The experiment on the comparative example resulted in 13 g of condensate.

Next, according to the example, the first gas flowed at 2.0 m/s under the conditions in which the flow rate of the first gas was 500 sLPM, the temperature of the first gas was 30°C, and the pressure of the first gas was 1.05 bara, as described above. The experiment on the example resulted in 6 g of condensate.

Next, according to the example, the first gas flowed at 10.0 m/s under the conditions in which the flow rate of the first gas was 500 sLPM, the temperature of the first gas was 30°C, and the pressure of the first gas was 1.05 bara, as described above. The experiment on the example resulted in 2 g of condensate.

From the above experimental results, it can be seen that approximately more than twice as much condensate is generated in the comparative example than in the example. Therefore, it can be seen that the humidifier 1 for fuel cells according to the present disclosure is implemented to allow the first gas to flow therethrough at a flow rate of 1 m/s to 10 m/s using the hollow fiber membrane bundle 221, thereby significantly reducing the amount of condensate generated. Accordingly, when the humidifier 1 for fuel cells according to the present disclosure is applied to a vehicle, the humidifier 1 for fuel cells according to the present disclosure may reduce the amount of condensate generated even while the vehicle is operating at low power, thereby preventing flooding caused by the condensate and contributing to improving the efficiency and durability of the fuel cell system.

As such, in the humidifier 1 for fuel cells according to the present disclosure, the hollow fiber membrane bundle 221 may be implemented to allow the first gas to flow therethrough at a flow rate of 1 m/s to 10 m/s under the conditions in which the flow rate of the first gas is 500 sLPM, the temperature of the first gas is 30°C, and the pressure of the first gas is 1.05 bara. That is, the hollow fiber membrane bundle 221 may be formed so as to satisfy the above flow rate conditions under the conditions in which the flow rate of the first gas is 500 sLPM, the temperature of the first gas is 30°C, and the pressure of the first gas is 1.05 bara.

Meanwhile, the hollow fiber membrane bundle 221 may allow the first gas to flow therethrough at a flow rate of 1 m/s to 10 m/s using the internal diameter 2213 of each of the hollow fiber membranes 2211 and the total number of strands of the hollow fiber membranes 2211. The internal diameter 2213 may correspond to the diameter of the hollow 2212. Meanwhile, the flow rate of the first gas may be determined by the combination of the internal diameter 2213 and the total number of strands. In this case, even if the internal diameter 2213 is small, the flow rate of the first gas may be reduced if the total number of strands increases. Even if the internal diameter 2213 is large, the flow rate of the first gas may be increased if the total number of strands is reduced. As such, the hollow fiber membrane bundle 221 may be implemented to allow the first gas to flow therethrough at a flow rate of 1 m/s to 10 m/s using the internal diameter 2213 of each of the hollow fiber membranes 2211 and the total number of strands of the hollow fiber membranes 2211.

Referring to FIGs. 2 to 7, the hollow fiber membrane bundle 221 may be implemented to allow the first gas to flow therethrough with a Reynolds number of 50 to 400 using the hollow fiber membranes 2211. In this case, the hollow fiber membrane bundle 221 may be implemented to satisfy the turbulent flow conditions in which the first gas flows with a Reynolds number of 50 to 400 using the hollow fiber membranes 2211. If the hollow fiber membrane bundle 221 allows the first gas to flow therethrough with a Reynolds number of less than 50, the amount of condensate generated may increase. If the hollow fiber membrane bundle 221 allows the first gas to flow therethrough with a Reynolds number of more than 400, the amount of condensate generated may be reduced, but the differential pressure may increase excessively, causing damage to or breakage of the hollow fiber membranes 2211. In consideration thereof, the humidifier 1 for fuel cells according to the present disclosure is implemented to allow the first gas to flow therethrough with a Reynolds number of 50 to 400 or more using the hollow fiber membrane bundle 221, thereby reducing the amount of condensate generated and at the same time reducing the risk of damage to or breakage of the hollow fiber membranes 2211. Meanwhile, when the humidifier 1 for fuel cells according to the present disclosure is applied to a vehicle, the humidifier 1 for fuel cells according to the present disclosure may reduce the amount of condensate generated even while the vehicle is operating at low power, thereby preventing flooding caused by the condensate and contributing to improving the efficiency and durability of the fuel cell system.

This can be seen from the results of experiments that measured the amount of condensate generated in an example and a comparative example in which the first gas flowed with different Reynolds numbers under the conditions in which the flow rate of the first gas is 500 sLPM, the temperature of the first gas is 30°C, and the pressure of the first gas is 1.05 bara. Meanwhile, the experiments were conducted under the conditions in which the flow rate of the second gas was 450 sLPM, the temperature of the second gas was 60°C, the relative humidity of the second gas was 100%, and the pressure of the second gas was 1.03 bara.

First, according to the comparative example, the first gas flowed with a Reynolds number of 30 under the conditions in which the flow rate of the first gas was 500 sLPM, the temperature of the first gas was 30°C, and the pressure of the first gas was 1.05 bara, as described above. The experiment on the comparative example resulted in 13 g of condensate.

Next, according to the example, the first gas flowed with a Reynolds number of 200 under the conditions in which the flow rate of the first gas was 500 sLPM, the temperature of the first gas was 30°C, and the pressure of the first gas was 1.05 bara, as described above. The experiment on the example resulted in 5 g of condensate.

Next, according to the example, the first gas flowed with a Reynolds number of 400 under the conditions in which the flow rate of the first gas was 500 sLPM, the temperature of the first gas was 30°C, and the pressure of the first gas was 1.05 bara, as described above. The experiment on the example resulted in 3 g of condensate.

From the above experimental results, it can be seen that approximately more than twice as much condensate is generated in the comparative example than in the example. Therefore, it can be seen that the humidifier 1 for fuel cells according to the present disclosure is implemented to allow the first gas to flow therethrough with a Reynolds number of 50 to 400 using the hollow fiber membrane bundle 221, thereby significantly reducing the amount of condensate generated. Accordingly, when the humidifier 1 for fuel cells according to the present disclosure is applied to a vehicle, the humidifier 1 for fuel cells according to the present disclosure may reduce the amount of condensate generated even while the vehicle is operating at low power, thereby preventing flooding caused by the condensate and contributing to improving the efficiency and durability of the fuel cell system.

As such, in the humidifier 1 for fuel cells according to the present disclosure, the hollow fiber membrane bundle 221 may be implemented to allow the first gas to flow therethrough with a Reynolds number of 50 to 400 under the conditions in which the flow rate of the first gas is 500 sLPM, the temperature of the first gas is 30°C, and the pressure of the first gas is 1.05 bara. That is, the hollow fiber membrane bundle 221 may be formed so as to satisfy the above turbulent flow conditions under the conditions in which the flow rate of the first gas is 500 sLPM, the temperature of the first gas is 30°C, and the pressure of the first gas is 1.05 bara. The Reynolds number of the first gas may be determined by the combination of the internal diameter 2213 of each of the hollow fiber membranes 2211 and the total number of strands of the hollow fiber membranes 2211. In this case, even if the internal diameter 2213 is small, the Reynolds number of the first gas may be reduced if the total number of strands increases. Even if the internal diameter 2213 is large, the Reynolds number of the first gas may be increased if the total number of strands is reduced. As such, the hollow fiber membrane bundle 221 may be implemented to allow the first gas to flow therethrough with a Reynolds number of 50 to 400 using the internal diameter 2213 of each of the hollow fiber membranes 2211 and the total number of strands of the hollow fiber membranes 2211.

Meanwhile, in the humidifier 1 for fuel cells according to the present disclosure, the hollow fiber membrane bundle 221 may be formed so as to satisfy at least one of the flow rate conditions and the turbulent flow conditions. If the flow rate conditions are satisfied, the hollow fiber membrane bundle 221 may allow the first gas to flow therethrough at a flow rate of 1 m/s to 10 m/s. If the turbulent flow conditions are satisfied, the hollow fiber membrane bundle 221 may allow the first gas to flow therethrough with a Reynolds number of 50 to 400. The hollow fiber membrane bundle 221 may also allow the first gas to flow therethrough at a flow rate of 1 m/s to 10 m/s and with a Reynolds number of 50 to 400.

The present disclosure described above is not limited to the above embodiments and the accompanying drawings, and it will be obvious to a person having ordinary skill in the art to which the present disclosure pertains that various substitutions, modifications, and alterations are possible without departing from the technical idea of the present disclosure.

## Claims

1. A cartridge provided in a humidifier for fuel cells, the humidifier being configured to humidify a first gas to be supplied to a fuel cell stack using a second gas, the cartridge comprising:
an inner case having openings formed at opposite ends; and
a hollow fiber membrane bundle received in the inner case, wherein
the hollow fiber membrane bundle comprises a plurality of hollow fiber membranes, the hollow fiber membrane bundle being formed so as to satisfy at least one of flow rate conditions in which the first gas flows at a flow rate of 1 m/s to 10 m/s and turbulent flow conditions in which the first gas flows with a Reynolds number of 50 to 400.

2. The cartridge according to claim 1, wherein the hollow fiber membrane bundle allows the first gas to flow therethrough at a flow rate of 1 m/s to 10 m/s under conditions in which a flow rate of the first gas is 500 sLPM, a temperature of the first gas is 30°C, and a pressure of the first gas is 1.05 bara.

3. The cartridge according to claim 2, wherein the hollow fiber membrane bundle allows the first gas to flow therethrough with a Reynolds number of 50 to 400 under the conditions in which the flow rate of the first gas is 500 sLPM, the temperature of the first gas is 30°C, and the pressure of the first gas is 1.05 bara.

4. The cartridge according to claim 1, wherein the hollow fiber membrane bundle allows the first gas to flow therethrough at a flow rate of 1 m/s to 10 m/s using an internal diameter of each of the hollow fiber membranes and a total number of strands of the hollow fiber membranes.

5. The cartridge according to claim 1, wherein the hollow fiber membrane bundle allows the first gas to flow therethrough with a Reynolds number of 50 to 400 under conditions in which a flow rate of the first gas is 500 sLPM, a temperature of the first gas is 30°C, and a pressure of the first gas is 1.05 bara.

6. The cartridge according to claim 1, wherein the hollow fiber membrane bundle allows the first gas to flow therethrough with a Reynolds number of 50 to 400 using an internal diameter of each of the hollow fiber membranes and a total number of strands of the hollow fiber membranes.

7. A humidifier for fuel cells, the humidifier comprising:
a humidifying module configured to humidify a first gas to be supplied to a fuel cell stack using a second gas;
a first cap coupled to one end of the humidifying module; and
a second cap coupled to the other end of the humidifying module, wherein
the humidifying module comprises:
a mid-case having open opposite ends; and
at least one cartridge received in the mid-case,
the cartridge comprises:
an inner case having openings formed at opposite ends; and
a hollow fiber membrane bundle received in the inner case, and
the hollow fiber membrane bundle comprises a plurality of hollow fiber membranes, the hollow fiber membrane bundle being configured to allow the first gas to flow therethrough at a flow rate of 1 m/s to 10 m/s.

8. The humidifier according to claim 7, wherein the hollow fiber membrane bundle allows the first gas to flow therethrough at a flow rate of 1 m/s to 10 m/s under conditions in which a flow rate of the first gas is 500 sLPM, a temperature of the first gas is 30°C, and a pressure of the first gas is 1.05 bara.

9. The humidifier according to claim 7, wherein the hollow fiber membrane bundle allows the first gas to flow therethrough at a flow rate of 1 m/s to 10 m/s using an internal diameter of each of the hollow fiber membranes and a total number of strands of the hollow fiber membranes.

10. The humidifier according to claim 7, wherein the hollow fiber membrane bundle allows the first gas to flow therethrough with a Reynolds number of 50 to 400 using the hollow fiber membranes.

11. A humidifier for fuel cells, the humidifier comprising:
a humidifying module configured to humidify a first gas to be supplied to a fuel cell stack using a second gas;
a first cap coupled to one end of the humidifying module; and
a second cap coupled to the other end of the humidifying module, wherein
the humidifying module comprises:
a mid-case having open opposite ends; and
at least one cartridge received in the mid-case,
the cartridge comprises:
an inner case having openings formed at opposite ends; and
a hollow fiber membrane bundle received in the inner case, and
the hollow fiber membrane bundle comprises a plurality of hollow fiber membranes, the hollow fiber membrane bundle being configured to allow the first gas to flow therethrough with a Reynolds number of 50 to 400.

12. The humidifier according to claim 11, wherein the hollow fiber membrane bundle allows the first gas to flow therethrough with a Reynolds number of 50 to 400 under conditions in which a flow rate of the first gas is 500 sLPM, a temperature of the first gas is 30°C, and a pressure of the first gas is 1.05 bara.

13. The humidifier according to claim 11, wherein the hollow fiber membrane bundle allows the first gas to flow therethrough with a Reynolds number of 50 to 400 using an internal diameter of each of the hollow fiber membranes and a total number of strands of the hollow fiber membranes.
